# EUROPÄISCHE PATENTSCHRIFT

(11) **EP 3 521 530 B1**
(45) Veröffentlichungstag und Bekanntmachung des Hinweises auf die Patenterteilung: **26.10.2022**
(21) Anmeldenummer: 19161360.3
(22) Anmeldetag: 16.01.2018
(51) Int. Cl.: E04F 15/18

(54) **ENTKOPPLUNGSMATTE**
DECOUPLING MAT
NATTE DE DÉCOUPLAGE

(30) Priorität: 09.03.2017 DE 202017101349 U
(43) Veröffentlichungstag der Anmeldung: 07.08.2019
(62) Teilanmeldung aus: 18151856.4
(73) Patentinhaber: Schlüter-Systems KG, 58640 Iserlohn (DE)
(72) Erfinder: SCHLÜTER, Werner, 58644 Iserlohn (DE)
(74) Vertreter: Schröter & Albrecht Patentanwälte PartG mbB

(56) Entgegenhaltungen:
- EP-A2- 1 700 970
- WO-A1-99/54571
- WO-A1-2015/161888
- DE-U1-202011 110 801
- US-A1- 2014 069 039
- US-B1- 7 014 390

## Beschreibung

Die vorliegende Erfindung betrifft eine Entkopplungsmatte umfassend eine Kunststoffschicht aus folienartigem Kunststoff mit einer Strukturierung, die auf der ersten Seite mit Hinterschneidungen versehene Vertiefungen und auf der gegenüberliegenden zweiten Seite zwischen den Vertiefungen angeordnete, einander kreuzende und eine gitterförmige Anordnung bildende Hohlräume definiert, und ein fest mit der zweiten Seite verbundenes, die Hohlräume abdeckendes Vlies oder Gewebe.

Entkopplungsmatten der eingangs genannten Art werden dazu eingesetzt, einen Untergrund und einen auf diesem verlegten Plattenbelag spannungstechnisch derart zu entkoppeln, dass die Übertragung von insbesondere innerhalb des Untergrunds entstehenden Spannungen auf den Plattenbelag verhindert wird. Somit kann einer Entstehung von Rissen im Plattenbelag oder einer Ablösung einzelner Platten vorgebeugt werden. Hierzu werden Entkopplungsmatten normalerweise in einem ersten Schritt unter Verwendung eines sich in dem Vlies oder Gewebe verkrallenden Klebers an dem Untergrund befestigt. Bei dem Kleber kann es sich beispielsweise um einen Dünnbettmörtel, einen Reaktionsharzmörtel oder dergleichen handeln, wobei nachfolgend der Einfachheit halber nur noch auf Dünnbettmörtel Bezug genommen wird. In einem weiteren Schritt wird dann der Plattenbelag unter erneutem Einsatz von Dünnbettmörtel auf der Kunststoffschicht der Entkopplungsmatte verlegt, wobei sich der Dünnbettmörtel in den mit Hinterschneidungen versehenen Vertiefungen unter Bildung von Dünnbettmörtelstelzen verankert. Auf diese Weise wird insgesamt ein fester Verbund zwischen dem Untergrund und dem Plattenbelag erzielt. Im Untergrund vorhandene Spannungen, die beispielsweise durch den restlichen Trocknungs- bzw. Aushärtungsprozess des Untergrunds, durch so genanntes Setzen eines Bauwerks, durch Temperaturänderungen aufgrund unterschiedlicher thermischer Ausdehnungskoeffizienten der eingesetzten Materialien oder dergleichen verursacht werden, werden dann in dem Verbund durch entsprechende Verformung der Entkopplungsmatten aufgenommen und kompensiert, so dass sie nicht auf den Plattenbelag übertragen werden können. Die hierfür erforderliche Bewegungsfreiheit der Entkopplungsmatte wird durch die an der zweiten Seite der Kunststoffschicht ausgebildeten Hohlräume bereitgestellt. Beispielhaft sei in diesem Zusammenhang auf die in den Druckschriften DE 37 01 414 A1 und EP 1 073 813 B2 beschriebenen Entkopplungsmatten verwiesen, auf deren Offenbarung hiermit vollumfänglich Bezug genommen wird.

Die DE 37 01 414 A1 beschreibt eine Entkopplungsmatte, deren Kunststoffschicht eine zieharmonikaförmige Strukturierung aufweist, wobei sowohl die auf der ersten Seite definierten Vertiefungen als auch die auf der zweiten Seite definierten Hohlräume schwalbenschwanzförmig ausgebildet sind und sich jeweils parallel zueinander erstrecken. Auf diese Weise wird die zur Entkopplung erforderliche Bewegungsfreiheit der Entkopplungsmatte strukturbedingt im Wesentlichen in einer Richtung quer zur Erstreckungsrichtung der Hohlräume bereitgestellt.

Die EP 1 073 813 B2 schlägt ausgehend von der DE 37 01 414 A1 hingegen eine Entkopplungsmatte mit einer Kunststoffschicht vor, deren Strukturierung auf der zweiten Seite sich gitterartig kreuzende Hohlräume und auf der ersten Seite durch die Hohlräume begrenzte, mit Hinterschneidungen versehene Vertiefungen aufweist. Bei dieser Entkopplungsmatte wird somit nicht von dem in der DE 37 01 414 A1 beschriebenen, durch die zieharmonikaartige Strukturierung der Kunststoffschicht bedingten Entkopplungsprinzip Gebrauch gemacht. Vielmehr wird bei der in der EP 1 073 813 beschriebenen Entkopplungsmatte auf die Dehnfähigkeit des folienartigen Kunststoffes zur Erzielung der Entkopplungswirkung gesetzt, die eine Bewegung der in den Vertiefungen gebildeten Dünnbettmörtelstelzen in Richtung der Hohlräume unter Verformung der Kunststoffschicht zulässt.

Eine weitere Matte ist in der US2014/069039 A1 offenbart. Ergänzenden Stand der Technik bilden die Druckschriften WO2015/161888 A1, US 7 014 390 B1, US 2014/069039 A1, DE 20 2011 110801 U1, WO99/54571 A1 und EP 1 700 970 A2.

Grundsätzlich ist es wünschenswert, die Entkopplungsfähigkeit von bekannten Entkopplungsmatten weiter zu verbessern.

Insbesondere besteht ein Nachteil bekannter Entkopplungsmatten darin, dass die Luft beim Verfüllen der Vertiefungen mit einem Dünnbettmörtel häufig nicht vollständig aus den Vertiefungen entweichen kann, so dass Lufteinschlüsse entstehen, die innerhalb des Mörtels unkontrollierte Hohlräume bilden, was nicht wünschenswert ist.

Ferner ist es wünschenswert, die Verklammerung der Unterseite bekannter Entkopplungsmatten, die durch das Vlies oder Gewebe gebildet wird, mit einem Dünnbettmörtel zu verbessern.

Ausgehend von diesem Stand der Technik ist es eine Aufgabe der vorliegenden Erfindung, eine Entkopplungsmatte der eingangs genannten Art mit alternativem Aufbau zu schaffen.

Zur Lösung dieser Aufgabe schafft die vorliegende Erfindung eine Entkopplungsmatte der eingangs genannten Art, die dadurch gekennzeichnet ist, dass die Vertiefungen Eckbereiche aufweisen, wobei sich der Querschnitt der Vertiefungen in zumindest einigen Eckbereichen in Richtung der ersten Seite vergrößert, insbesondere stetig vergrößert, bevorzugt ausgehend von dem Boden der entsprechenden Vertiefung. Derartig gestaltete Eckbereiche führen dazu, dass Luft während des Auftragens von Dünnbettmörtel auf der ersten Seite der Kunststoffschicht der Entkopplungsmatte mit geeigneter Kelle gut entweichen kann, wodurch Lufteinschlüsse und die mit diesen einhergehenden Bildungen von unkontrollierten Hohlräumen verhindert werden können und eine gute sowie gleichmäßige Ausfüllung der Vertiefungen mit Dünnbettmörtel gewährleistet wird.

Vorteilhaft ist die Kunststoffschicht flexibel und mit einer Vielzahl von Schwächungszonen versehen ist, die sich jeweils zwischen zwei Reihen von Vertiefungen geradlinig und durchgehend zwischen gegenüberliegenden Seitenkanten der Kunststoffschicht erstrecken und durch die der Kunststoffschicht strukturell eine zusätzliche Bewegungsmöglichkeit im Wesentlichen quer zur Erstreckungsrichtung der Schwächungszonen gegeben wird. Mit anderen Worten schlägt die vorliegende Erfindung vor, die Entkopplungsfähigkeit einer Entkopplungsmatte der in der EP 1 073 813 B2 beschriebenen Art durch die Ausbildung zusätzlicher Schwächezonen weiter zu verbessern. Durch die Schwächungszonen wird der Kunststoffschicht strukturell eine zusätzliche Bewegungsmöglichkeit im Wesentlichen quer zur insbesondere geradlinigen Erstreckungsrichtung der Schwächungszonen gegeben, welche die durch die Hohlräume bereitgestellte Bewegungsfreiheit ergänzt, wodurch insgesamt eine Entkopplungsmatte mit deutlich verbessertem Entkopplungsvermögen bereitgestellt wird.

Die Schwächungszonen sind bevorzugt in Form von Nuten vorgesehen, wobei die Nuten beispielsweise einen halbkreis-, halbelliptischen oder einen V-förmigen oder dreieckigen Querschnitt aufweisen können. Auf diese Weise lässt sich die erfindungsgemäße Entkopplungsmatte mit einem einfachen Aufbau realisieren.

Gemäß einer Ausgestaltung der vorliegenden Erfindung weist die Kunststoffschicht eine im Wesentlichen konstante Dicke auf, wobei die Dicke im Bereich der Schwächungszonen geringer ist. Auf diese Weise wird also nicht nur strukturell sondern auch durch eine geringere Dicke der Kunststoffschicht im Bereich der Schwächungszonen eine gezielte Schwächung der Kunststoffschicht herbeigeführt.

Bevorzugt ist eine erste Schar von sich parallel zueinander erstreckenden Schwächungszonen vorgesehen, die sich insbesondere quer zu einer Längsrichtung der Entkopplungsmatte erstrecken, beispielsweise senkrecht zur Längsrichtung. Ist die Entkopplungsmatte länglich ausgebildet, also in Draufsicht rechteckig mit einer kürzeren und einer längeren Seitenkante, so entspricht die Längsrichtung vorteilhaft der Erstreckungsrichtung der längeren Seitenkante. Auf diese Weise wird eine zusätzliche Entkopplung bereitgestellt, die insbesondere im Wesentlichen senkrecht zur Erstreckungsrichtung der ersten Schar von Schwächungszonen wirkende Spannungen kompensiert.

Vorteilhaft ist eine zweite von sich parallel zueinander erstreckenden Schwächungszonen vorgesehen, welche die erste Schar kreuzt, insbesondere rechtwinklig. Entsprechend wird eine weitere zusätzliche Entkopplungswirkung bereitgestellt, die insbesondere im Wesentlichen senkrecht zur Erstreckungsrichtung der zweiten Schar von Schwächungszonen wirkende Spannungen kompensiert. Es sollte klar sein, dass auch mehr als zwei Scharen von sich parallel zueinander streckenden Schwächungszonen vorgesehen sein können, die einander kreuzen.

Vorteilhaft sind die Schwächungszonen in regelmäßigen Abständen zueinander angeordnet, wobei die Abstände bevorzugt im Bereich von 10 bis 100 mm liegen, insbesondere im Bereich von 10 bis 50 mm. Es hat sich gezeigt, dass diese Abstände innerhalb der genannten Bereiche eine gute Entkopplung bewirken.

Vorteilhaft erstrecken sich die Schwächungszonen jeweils zwischen zwei Reihen von Vertiefungen, also nicht durch die Vertiefungen selbst. Dabei können Schwächungszonen zwischen jeder Reihe von Vertiefungen ausgebildet sein. Alternativ ist es aber auch möglich, Schwächungszonen beispielsweise nur zwischen jeder zweiten oder dritten Reihe von Vertiefungen vorzusehen.

Bevorzugt weist das Vlies oder Gewebe Durchgangsöffnungen mit einem Querschnitt im Bereich von 0,5 bis 1,0 mm² auf, insbesondere im Bereich von 0,5 und 0,8 mm². Derart kleine Durchgangsöffnungen mit einem Querschnitt im besagten Bereich zeichnen sich dadurch aus, dass sie Dünnbettmörtel in herkömmlich verwendeter Konsistenz bei üblichem manuellen Anpressdruck der Entkopplungsmatten während ihrer Verlegung bedingt durchlassen, woraufhin sich der Dünnbettmörtel nicht nur an dem Vlies oder Gewebe sondern auch hinter diesem verkrallen kann, wobei jedoch ein Zusetzen der für die Entkopplungswirkung wesentlichen Hohlräume mit Dünnbettmörtel sicher verhindert wird.

Vorteilhaft weist die Entkopplungsmatte bei dieser Variante 100 bis 3000 Vertiefungen pro Quadratmeter aufweist, wodurch die Entkopplungsfunktion ebenfalls optimiert wird.

Gemäß einer Ausgestaltung der vorliegenden Erfindung weisen die Vertiefungen eine minimale Breite im Bereich von 3 bis 20 mm und eine maximale Höhe im Bereich von 2 bis 20 mm auf.

Weitere Merkmale und Vorteile der vorliegenden Erfindung werden anhand der nachfolgenden Beschreibung von Ausführungsformen erfindungsgemäßer Entkopplungsmatten unter Bezugnahme auf die beiliegende Zeichnung deutlich. Darin ist
Figur 1 eine schematische perspektivische Teilansicht einer Entkopplungsmatte gemäß einer ersten Ausführungsform der vorliegenden Erfindung;
Figur 2 eine vergrößerte Seitenansicht des in Figur 1 mit dem Bezugszeichen II versehenen Ausschnitts, der einen Schwächungszone zeigt;
Figur 3 eine Draufsicht der in Figur 1 gezeigten Anordnung;
Figur 4 eine Ansicht analog zu Figur 2, die eine alternative Ausgestaltung einer Schwächungszone zeigt;
Figur 5 eine Seitenansicht der in Figur 1 dargestellten Anordnung im bestimmungsgemäß verlegten Zustand;
Figur 6 eine schematische Draufsicht einer Entkopplungsmatte gemäß einer zweiten Ausführungsform der vorliegenden Erfindung;
Figur 7 eine Querschnittansicht entlang der Linie VII-VII in Figur 6 und
Figur 8 eine Querschnittansicht entlang der Linie VIII-VIII in Figur 6.

Gleiche Bezugsziffern beziehen sich nachfolgend auf gleiche oder gleichartige Komponenten.

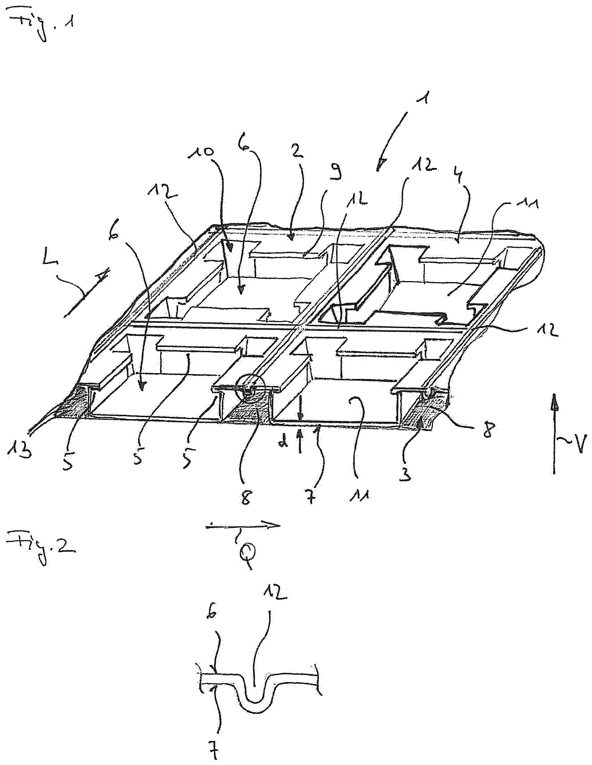

Die Figuren 1 bis 5 zeigen eine Entkopplungsmatte 1 gemäß einer Ausführungsform der vorliegenden Erfindung, die als Hauptkomponenten eine Kunststoffschicht 2 und ein Vlies oder Gewebe 3 aufweist und als Platten- oder Rollenware bereitgestellt sein kann.

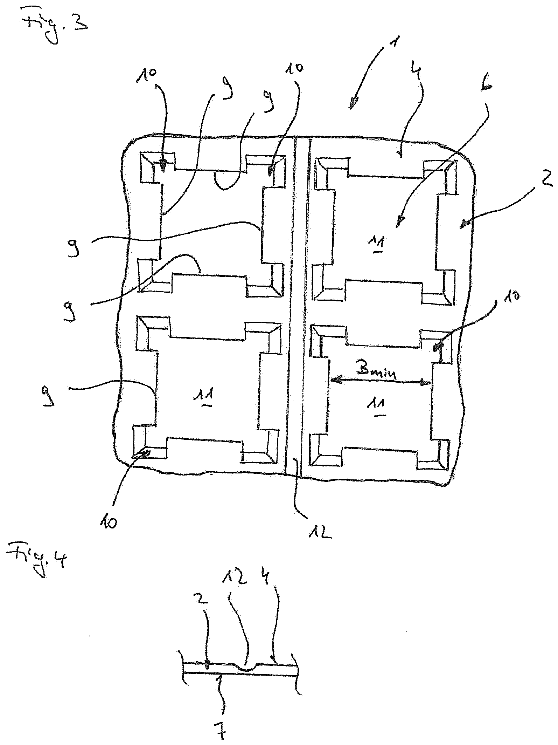

Die Kunststoffschicht 2 ist aus folienartigem Kunststoff hergestellt und weist eine im Wesentlichen gleichmäßige Dicke d auf, die normalerweise im Bereich zwischen 0,4 und 1,0 mm liegt. Entsprechend ist die Kunststoffschicht 2 dehnfähig, lässt sich also manuell verformen. Die Kunststoffschicht 2 ist mit einer Strukturierung versehen, die auf einer ersten Seite 4, die im bestimmungsgemäß verlegten Zustand der Entkopplungsmatte 1 die Oberseite bildet, mit Hinterschneidungen 5 versehene Vertiefungen 6 und auf der gegenüberliegenden zweiten Seite 7 zwischen den Vertiefungen 6 angeordnete Hohlräume 8 definiert, die vorliegend einander kreuzen und eine gitterartige Anordnung bilden. Die in regelmäßiger Anordnung vorgesehenen Vertiefungen 6 weisen bevorzugt eine minimale Breite Bₘᵢₙ im Bereich von 3 bis 20 mm und eine maximale Höhe Hₘₐₓ im Bereich von 2 bis 8 mm auf, wobei ihre Anzahl insbesondere 500 bis 3000 pro Quadratmeter beträgt. Vorliegend haben die Vertiefungen 6 im Wesentlichen die Form eines Quaders, wobei die Hinterschneidungen 5 jeweils durch einen Vorsprung 9 gebildet werden, der in die Vertiefung 6 vorsteht. Es sollte allerdings klar sein, dass die Vertiefungen 6 auch von der Form eines Quaders abweichen können, beispielsweise eine in Draufsicht sechs- oder achteckige, eine kreuzförmige oder eine gerundete Form haben können. Ebenso sind Form und Anzahl der Vorsprünge 9 und entsprechend auch der durch diese gebildeten Hinterschneidungen 5 variierbar. So können die Seitenwände, welche die Vertiefungen 6 seitlich begrenzen, zur Ausbildung der Hinterschneidungen 5 auch einfach eine entsprechende Neigung zur Vertikalen V (Richtung senkrecht zum Boden 11) aufweisen. Der Querschnitt der Vertiefungen 6 vergrößert sich in den Eckbereichen 10 ausgehend von dem Boden 11 in Richtung der ersten Seite 4 stetig. Dies wird vorliegend dadurch erreicht, dass die die Eckbereiche 10 definierenden Innenkanten gegenüber der Vertikalen V entsprechend geneigt sind. Zwischen den Vertiefungen 6 erstreckt sich eine Vielzahl von Schwächungszonen 12, die sich durchgehend und bevorzugt geradlinig zwischen gegenüberliegenden Seitenkanten der Kunststoffschicht 2, vorliegend senkrecht zu diesen und parallel zueinander erstrecken. Die Schwächungszonen 12 sind als Nuten mit im Wesentlichen halbkreisförmigem Querschnitt vorgesehen. Grundsätzlich können die Nuten aber auch eine hiervon abweichende Querschnittsform aufweisen, wie beispielsweise die Form eine Halbellipse, eine dreieckige Form oder dergleichen. Die Dicke d ist bei der in Figur 2 gezeigten Ausgestaltung der Schwächungszonen 12 bezogen auf die Dicke d der sonstigen Kunststoffschicht 2 konstant. Sie kann aber auch geringer sein, wie es exemplarisch in Figur 4 dargestellt ist, wodurch ein zusätzlicher Schwächungseffekt erzielt wird. Die Schwächungszonen 12 sind in regelmäßigen Abständen zueinander angeordnet, wobei die Abstände bevorzugt im Bereich von 10 bis 100 mm liegen, insbesondere im Bereich von 10 bis 50 mm. Dabei können die Schwächungszonen 12 zwischen jeder Reihe von Vertiefungen 6 ausgebildet sein. Alternativ können sie aber auch nur zwischen jeder zweiten oder dritten Reihe von Vertiefungen 6 vorgesehen sein, um nur ein Beispiel zu nennen. Auch können die Abstände der parallelen Schwächungszonen 12 in Längsrichtung L und Querrichtung Q der Entkopplungsmatte 1 verschieden sein. Darüber hinaus können Schwächungszonen 12 auch nur quer zur Längsrichtung L oder nur quer zur Querrichtung Q ausgebildet sein.

Das Vlies oder Gewebe 3 ist fest mit der zweiten Seite 7 der Kunststoffschicht 2 verbunden und bedeckt entsprechend deren Hohlräume 8. So kann das Vlies oder Gewebe 3 beispielsweise auf die zweite Seite 7 der Kunststoffschicht 2 aufkaschiert oder mit dieser verklebt sein. Das Vlies- oder Gewebe 3 umfasst in regelmäßiger Anordnung Durchgangsöffnungen 13 mit einem Querschnitt im Bereich von 0,5 bis 1,0 mm², insbesondere im Bereich von 0,5 bis 0,8 mm².

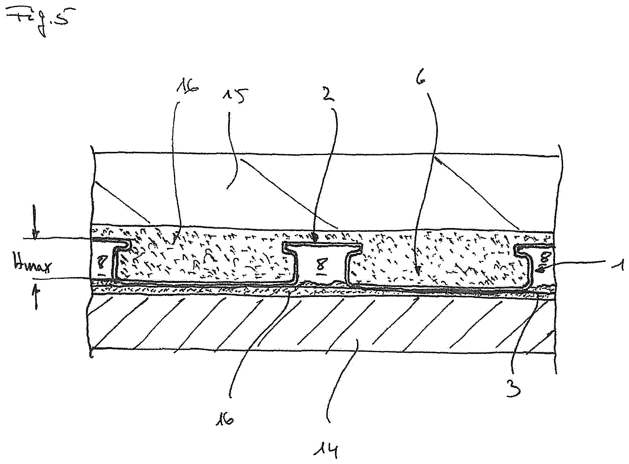

Die Entkopplungsmatte 1 dient dazu, einen Untergrund 14 und einen auf diesem verlegten Plattenbelag 15 spannungstechnisch zu entkoppeln. In einem ersten Schritt wird sie, wie es in Figur 5 dargestellt ist, unter Verwendung eines Dünnbettmörtels 16 an dem Untergrund 14 befestigt. Der Dünnbettmörtel 16 wird dabei meist mit einer Kelle und/oder Zahnkelle auf den Untergrund 14 aufgetragen, woraufhin die Entkopplungsmatte 1 auf diesem positioniert und angedrückt wird. Hierbei verkrallt sich der Dünnbettmörtel in dem Vlies oder Gewebe 3, wodurch eine erste Fixierung bewirkt wird. Ein Vlies ist dahingehend von Vorteil, dass es aus einer Vielzahl kleiner Einzelfäden besteht, die auch auswärts vorstehen, wodurch ein inniger Verbund mit dem Dünnbettmörtel 16 erzielt wird. Im Falle eines Gewebes sollte auch dieses vorstehende Einzelfäden nach Art eines Vlies aufweisen, um auch hier den entsprechenden Effekt zu bewirken. Dank des gewählten Querschnitts der Durchgangsöffnungen 13 sind diese hinreichend groß, dass der Dünnbettmörtel 16 das Vlies oder Gewebe 3 geringfügig durchdringt, wodurch eine weitere Fixierung durch eine Verankerung des Dünnbettmörtels 16 hinter dem Vlies oder Gewebe 3 erzielt wird, aber auch hinreichend klein, was ein vollständiges Zusetzen der Hohlräume 8 der Entkopplungsmatte 1 mit Dünnbettmörtel 16 sicher verhindert.

In einem zweiten Schritt wird dann der Plattenbelag 15, beispielsweise in Form von Fliesen, unter erneutem Einsatz von Dünnbettmörtel 16 auf der Kunststoffschicht 2 der Entkopplungsmatte 1 verlegt, wobei sich der Dünnbettmörtel 16 in den mit Hinterschneidungen 5 versehenen Vertiefungen 6 verankert. Bei dem Verteilen des Dünnbettmörtels 16 auf der Kunststoffschicht 2 mit einer Kelle und/oder Zahnkelle wird Dank der Ausbildung der Eckbereiche 10 der Vertiefungen 6 sichergestellt, dass in den Vertiefungen 6 vorhandene Luft problemlos entweichen kann, wodurch eine Hohlraumbildung zwischen der Entkopplungsmatte 1 und dem Plattenbelag 15 unterdrückt und ebenso ein vollständiges Ausfüllen der Vertiefungen 6 mit Dünnbettmörtel 16 gewährleistet wird.

Treten nunmehr im Untergrund 14 Spannungen auf, die beispielsweise durch den restlichen Trocknungs- bzw. Aushärtungsprozess des Untergrunds 14, durch so genanntes Setzen eines Bauwerks, durch Temperaturänderungen aufgrund unterschiedlicher thermischer Ausdehnungskoeffizienten der eingesetzten Materialien oder dergleichen verursacht werden, so werden diese Spannungen durch entsprechende Verformung der Entkopplungsmatte 1 aufgenommen und kompensiert, so dass sie nicht auf den Plattenbelag 15 übertragen werden können. Die hierfür erforderliche Bewegungsfreiheit der Entkopplungsmatte 1 wird einerseits durch die an der zweiten Seite 7 der Kunststoffschicht 2 ausgebildeten Hohlräume 8 bereitgestellt, die eine Bewegung der in den Vertiefungen 6 gebildeten Dünnbettmörtelstelzen in Richtung der Hohlräume 8 ermöglichen. Andererseits ermöglichen die Schwächungszonen 12 eine Dehnung und/oder Stauchung der Kunststoffschicht jeweils im Wesentlichen senkrecht zur Erstreckungsrichtung der Schwächungszonen 12, wodurch eine zusätzliche Entkopplung bereitgestellt wird.

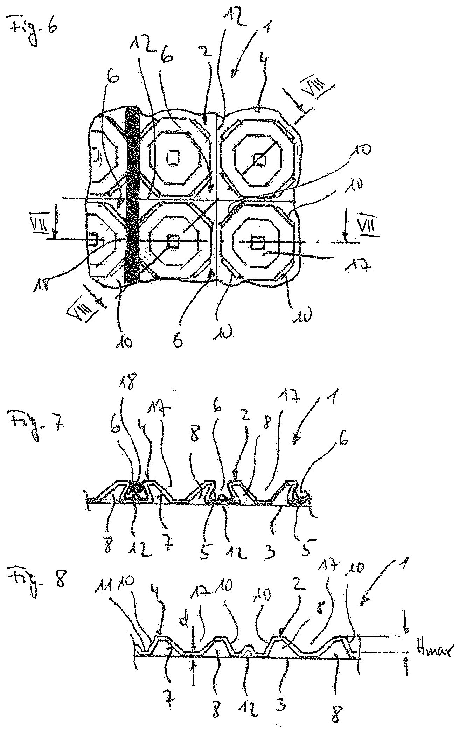

Die Figuren 6 bis 8 zeigen eine Entkopplungsmatte 1 gemäß einer zweiten Ausführungsform der vorliegenden Erfindung, die als Hauptkomponenten ebenfalls eine Kunststoffschicht 2 und ein Vlies oder Gewebe 3 aufweist. Die Entkopplungsmatte 1 gemäß der zweiten Ausführungsform unterscheidet sich von der zuvor beschriebenen Ausführungsform allein im Hinblick auf die Strukturierung der Kunststoffschicht 2. Die Strukturierung definiert vorliegend auf der ersten Seite 4, die im bestimmungsgemäß verlegten Zustand der Entkopplungsmatte 1 die Oberseite bildet, mit Hinterschneidungen 5 versehene Vertiefungen 6, die kanalartig ausgebildet sind und eine gitterartige Anordnung bilden. Auf der gegenüberliegenden zweiten Seite 7 definiert die Strukturierung zwischen den Vertiefungen 6 angeordnete Hohlräume 8, die vorliegend eine achteckige Ringform aufweisen, so dass inmitten eines ringförmigen Hohlraums 8 auf der ersten Seite 4 eine Einbuchtung 17 entsteht. Die Vertiefungen 6 weisen einen Querschnitt auf, der an den Durchmesser eines Kabels 18, insbesondere Heizkabels derart angepasst ist, dass das Kabel 18 klemmend in den Vertiefungen 6 aufgenommen werden kann, wie es exemplarisch in den Figuren 6 und 7 dargestellt ist. Inmitten der Vertiefungen 6 erstrecken sich in Längs- und Querrichtung der Entkopplungsmatte 1 die Schwächungszonen 12, die vorliegend analog zu der in Figur 2 dargestellten Schwächungszone 12 ausgebildet sind, nur dass sie auf- und nicht abwärts gewölbt sind. Es sei darauf hingewiesen, dass die Form der Vertiefungen 6 und Hohlräume 8 variieren kann. So können die Hohlräume auch eine von einer achteckigen Ringform abweichende Form aufweisen, um nur ein Beispiel zu nennen.

Es sollte klar sein, dass die zuvor beschriebenen Ausführungsformen nur als Beispiel dienen und in keiner Weise als einschränkend zu verstehen sind. Vielmehr sind Änderungen und/oder Modifikationen möglich, ohne den Schutzbereich der vorliegenden Anmeldung zu verlassen, der durch die beiliegenden Ansprüche definiert ist. Insbesondere können Einzelmerkmale der beschriebenen Ausführungsformen ausgetauscht werden.

### BEZUGSZIFFERNLISTE

- 1: Entkopplungsmatte
- 2: Kunststoffschicht
- 3: Vlies/Gewebe
- 4: erste Seite
- 5: Hinterschneidung
- 6: Vertiefung
- 7: zweite Seite
- 8: Hohlraum
- 9: Vorsprung
- 10: Eckbereich
- 11: Boden
- 12: Schwächungszone
- 13: Durchgangsöffnung
- 14: Untergrund
- 15: Plattenbelag
- 16: Dünnbettmörtel
- 17: Einbuchtung
- 18: Kabel

- Bₘᵢₙ: minimale Breite
- Hₘₐₓ: maximale Höhe
- d: Dicke
- V: Vertikale
- L: Längsrichtung
- Q: Querrichtung

## Patentansprüche

1. Entkopplungsmatte (1) umfassend eine Kunststoffschicht (2) aus folienartigem Kunststoff mit einer Strukturierung, die auf der ersten Seite (4) mit Hinterschneidungen (5) versehene Vertiefungen (6) und auf der gegenüberliegenden zweiten Seite (7) zwischen den Vertiefungen (6) angeordnete, einander kreuzende und eine gitterartige Anordnung bildende Hohlräume (8) definiert, und ein fest mit der zweiten Seite (7) verbundenes, die Hohlräume (8) abdeckendes Vlies oder Gewebe (3), **dadurch gekennzeichnet, dass** sich der Querschnitt der Vertiefungen (6) in zumindest einigen Eckbereichen (10) in Richtung der ersten Seite (4) vergrößert, insbesondere stetig vergrößert, bevorzugt ausgehend von dem Boden (11) der entsprechenden Vertiefung (6).

2. Entkopplungsmatte (1) nach Anspruch 1, **dadurch gekennzeichnet, dass** die Kunststoffschicht (2) flexibel und mit einer Vielzahl von Schwächungszonen (12) versehen ist, die sich jeweils zwischen zwei Reihen von Vertiefungen (6) geradlinig und durchgehend zwischen gegenüberliegenden Seitenkanten der Kunststoffschicht (2) erstrecken und durch die der Kunststoffschicht (2) strukturell eine zusätzliche Bewegungsmöglichkeit im Wesentlichen quer zur Erstreckungsrichtung der Schwächungszonen (1) gegeben wird.

3. Entkopplungsmatte (1) nach Anspruch 2, **dadurch gekennzeichnet, dass** die Schwächungszonen (12) in Form von Nuten vorgesehen sind.

4. Entkopplungsmatte (1) nach Anspruch 2 oder 3, **dadurch gekennzeichnet, dass** die Kunststoffschicht (2) eine im Wesentlichen konstante Dicke (d) aufweist, wobei die Dicke (d) im Bereich der Schwächungszonen (12) geringer ist.

5. Entkopplungsmatte (1) nach einem der Ansprüche 2 bis 4, **dadurch gekennzeichnet, dass** eine erste Schar von sich parallel zueinander erstreckenden Schwächungszonen (12) vorgesehen ist, die sich insbesondere quer zu einer Längsrichtung der Entkopplungsmatte (1) erstrecken.

6. Entkopplungsmatte (1) nach Anspruch 5, **dadurch gekennzeichnet, dass** eine zweite Schar von sich parallel zueinander erstreckenden Schwächungszonen (12) vorgesehen ist, welche die erste Schar kreuzt, insbesondere rechtwinklig.

7. Entkopplungsmatte (1) nach einem der Ansprüche 2 bis 6, **dadurch gekennzeichnet, dass** die Schwächungszonen (12) in regelmäßigen Abständen zueinander angeordnet sind, wobei die Abstände bevorzugt im Bereich von 10 bis 100 mm liegen, insbesondere im Bereich von 10 bis 50 mm.

8. Entkopplungsmatte (1) nach einem der Ansprüche 2 bis 7, **dadurch gekennzeichnet, dass** sich die Schwächungszonen (12) jeweils zwischen zwei Reihen von Vertiefungen (6) erstrecken.

9. Entkopplungsmatte (1) nach einem der vorhergehenden Ansprüche, **dadurch gekennzeichnet, dass** das Vlies oder Gewebe (3) Durchgangsöffnungen (13) mit einem Querschnitt im Bereich von 0,5 bis 1,0 mm² aufweist, insbesondere im Bereich von 0,5 bis 0,8 mm².

10. Entkopplungsmatte (1) nach einem der vorhergehenden Ansprüche, **dadurch gekennzeichnet, dass** diese 100 bis 3000 Vertiefungen (6) pro Quadratmeter aufweist.

11. Entkopplungsmatte (1) nach einem der vorhergehenden Ansprüche, **dadurch gekennzeichnet, dass** die Vertiefungen (6) eine minimale Breite (Bₘᵢₙ) im Bereich von 3 bis 20 mm und eine maximale Höhe (Hₘₐₓ) im Bereich von 2 bis 20 mm aufweisen.

## Claims

1. Decoupling mat (1) comprising a plastic layer (2) of film-like plastic with a structuring which defines indentations (6) provided with undercuts (5) on the first side (4) and cavities (8) arranged between the indentations (6) on the opposite second side (7), said cavities (8) crossing each other and forming a grid-like arrangement, and a fleece or fabric (3) firmly connected to the second side (7) and covering the cavities (8), **characterized in that** the cross section of the indentations (6) increases in at least some corner regions (10) in the direction of the first side (4), in particular increases continuously, preferably starting from the bottom (11) of the corresponding indentation (6).

2. Decoupling mat (1) according to claim 1, **characterized in that** the plastic layer (2) is flexible and provided with a plurality of weakening zones (12), each of which extends between two rows of indentations (6) in a straight line and continuously between opposite side edges of the plastic layer (2) and by which the plastic layer (2) is structurally given an additional possibility of movement essentially transversely to the direction of extension of the weakening zones (12).

3. Decoupling mat (1) according to claim 2, **characterized in that** the weakening zones (12) are provided in the form of grooves.

4. Decoupling mat (1) according to claim 2 or 3, **characterized in that** the plastic layer (2) has a substantially constant thickness (d), the thickness (d) being smaller in the region of the weakening zones (12).

5. Decoupling mat (1) according to one of claims 2 to 4, **characterized in that** a first array of weakening zones (12) extending parallel to one another is provided, which weakening zones (12) extend in particular transversely to a longitudinal direction of the decoupling mat (1).

6. Decoupling mat (1) according to claim 5, **characterized in that** a second array of weakening zones (12) extending parallel to one another is provided, which crosses the first array, in particular at right angles.

7. Decoupling mat (1) according to one of claims 2 to 6, **characterized in that** the weakening zones (12) are arranged at regular distances from one another, the distances preferably being in the range from 10 to 100 mm, in particular in the range from 10 to 50 mm.

8. Decoupling mat (1) according to one of claims 2 to 7, **characterized in that** the weakening zones (12) each extend between two rows of indentations (6).

9. Decoupling mat (1) according to one of the preceding claims, **characterized in that** the fleece or fabric (3) has through-openings (13) with a cross-section in the range from 0.5 to 1.0 mm², in particular in the range from 0.5 to 0.8 mm².

10. Decoupling mat (1) according to one of the preceding claims, **characterized in that** it has 100 to 3000 indentations (6) per square meter.

11. Decoupling mat (1) according to one of the preceding claims, **characterized in that** the indentations (6) have a minimum width (Bₘᵢₙ) in the range from 3 to 20 mm and a maximum height (Hₘₐₓ) in the range from 2 to 20 mm.

## Revendications

1. Tapis de découplage (1) comprenant une couche de matière plastique (2) en plastique en forme de feuille avec une structuration qui définit sur la première face (4) des empreintes (6) pourvues de contre-dépouilles (5) et sur la deuxième face opposée (7) des cavités (8) disposées entre les empreintes (6), se croisant et formant un agencement en forme de grille, et un non-tissé ou un tissu (3) relié de manière fixe au deuxième côté (7) et recouvrant les cavités (8), **caractérisé en ce que** la section transversale des empreintes (6) s'agrandit dans au moins quelques zones de coin (10) en direction du premier côté (4), en particulier s'agrandit de manière continue, de préférence en partant du fond (11) de l'empreinte (6) correspondante.

2. Tapis de découplage (1) selon la revendication 1, **caractérisé en ce que** la couche de matière plastique (2) est flexible et pourvue d'une pluralité de zones d'affaiblissement (12) qui s'étendent respectivement entre deux rangées d'empreintes (6) de manière rectiligne et continue entre des bords latéraux opposés de la couche de matière plastique (2) et grâce auxquelles une possibilité de mouvement supplémentaire est donnée structurellement à la couche de matière plastique (2), essentiellement transversalement à la direction d'extension des zones d'affaiblissement (1).

3. Tapis de découplage (1) selon la revendication 2, **caractérisé en ce que** les zones d'affaiblissement (12) sont prévues sous forme de rainures.

4. Tapis de découplage (1) selon la revendication 2 ou 3, **caractérisé en ce que** la couche de matière plastique (2) présente une épaisseur (d) sensiblement constante, l'épaisseur (d) étant plus faible au niveau des zones d'affaiblissement (12).

5. Tapis de découplage (1) selon l'une des revendications 2 à 4, **caractérisé en ce qu'il** est prévu un premier ensemble de zones d'affaiblissement (12) s'étendant parallèlement les unes aux autres, qui s'étendent en particulier transversalement à une direction longitudinale du tapis de découplage (1).

6. Tapis de découplage (1) selon la revendication 5, **caractérisé en ce qu'il** est prévu un deuxième ensemble de zones d'affaiblissement (12) s'étendant parallèlement les unes aux autres, qui croise le premier ensemble, en particulier à angle droit.

7. Tapis de découplage (1) selon l'une des revendications 2 à 6, **caractérisé en ce que** les zones d'affaiblissement (12) sont disposées à des distances régulières les unes des autres, les distances étant de préférence comprises entre 10 et 100 mm, en particulier entre 10 et 50 mm.

8. Tapis de découplage (1) selon l'une des revendications 2 à 7, **caractérisé en ce que** les zones d'affaiblissement (12) s'étendent respectivement entre deux rangées d'empreintes (6).

9. Tapis de découplage (1) selon l'une des revendications précédentes, **caractérisé en ce que** le non-tissé ou tissu (3) présente des ouvertures traversantes (13) d'une section comprise entre 0,5 et 1,0 mm², notamment entre 0,5 et 0,8 mm².

10. Tapis de découplage (1) selon l'une des revendications précédentes, **caractérisé en ce qu'il** présente 100 à 3000 empreintes (6) par mètre carré.

11. Tapis de découplage (1) selon l'une des revendications précédentes, **caractérisé en ce que** les empreintes (6) présentent une largeur minimale (Bₘᵢₙ) dans la plage de 3 à 20 mm et une hauteur maximale (Hₘₐₓ) dans la plage de 2 à 20 mm.
